# EUROPÄISCHE PATENTSCHRIFT

(11) **EP 2 419 629 B1**
(45) Veröffentlichungstag und Bekanntmachung des Hinweises auf die Patenterteilung: **31.07.2013**
(21) Anmeldenummer: 10706992.4
(22) Anmeldetag: 26.02.2010
(51) Int. Cl.: F03D 7/02

(54) **WINDENERGIEANLAGE UND ENERGIEÜBERTRAGUNGSEINRICHTUNG FÜR EINE WINDENERGIEANLAGE**
WIND ENERGY PLANT AND ENERGY TRANSMISSION DEVICE FOR A WIND ENERGY PLANT
ÉOLIENNE ET DISPOSITIF DE TRANSFERT D'ÉNERGIE POUR ÉOLIENNE

(30) Priorität: 14.04.2009 DE 102009017027
(43) Veröffentlichungstag der Anmeldung: 22.02.2012
(73) Patentinhaber: Siemens Aktiengesellschaft, 80333 München (DE); Winergy AG, 46562 Voerde (DE)
(72) Erfinder: KREIDLER, Volker, 72379 Hechingen (DE); STEINIGEWEG, Rolf-Jürgen, 91074 Herzogenaurach (DE)
(86) Internationale Anmeldenummer: PCT/EP2010/052478
(87) Internationale Veröffentlichungsnummer: WO 2010/118914

(56) Entgegenhaltungen:
- DE-A1- 10 153 644
- DE-A1-102004 017 323
- DE-A1-102006 009 127

## Beschreibung

Windenergieanlagen dienen einer Umwandlung kinetischer Energie von Wind mittels eines Rotors in elektrische Energie, um diese beispielsweise in ein elektrisches Energieübertragungsnetz einzuspeisen. Bewegungsenergie einer Windströmung wirkt auf Rotorblätter ein, die an einer Rotornabe montiert sind und bei einer Windströmung in eine Drehbewegung versetzt werden. Die Drehbewegung wird direkt oder mittels eines Getriebes auf einen Generator übertragen, der die Bewegungsenergie in elektrische Energie umwandelt. Ein den Generator umfassender Antriebsstrang ist bei konventionellen Windenergieanlagen in einer auf einem Turm montierten Gondel angeordnet.

Rotorblätter von Windenergieanlagen weisen ein aerodynamisches Profil auf, das einen Druckunterschied hervorruft, der durch einen Strömungsgeschwindigkeitsunterschied zwischen Saug- und Druckseite eines Rotorblatts bedingt ist. Aus diesem Druckunterschied resultiert ein auf den Rotor wirkendes Drehmoment, das dessen Geschwindigkeit beeinflußt.

Windenergieanlagen weisen vorwiegend eine horizontale Rotationsachse auf. Bei derartigen Windenergieanlagen erfolgt üblicherweise eine Windrichtungsnachführung der Gondel mittels Stellmotoren. Dabei wird die über ein Azimutlager mit dem Turm verbundene Gondel um dessen Achse gedreht.

Rotoren mit 3 Rotorblättern haben sich gegenüber Ein-, Zwei- oder Vierblatt-Rotoren durchgesetzt, da Dreiblatt-Rotoren schwingungstechnisch einfacher beherrschbar sind. Bei Rotoren mit einer geraden Anzahl von Rotorblättern werden auf ein Rotorblatt infolge von Windschatteneffekten einwirkende Kippkräfte durch ein um 180 ° versetztes gegenüberliegendes Rotorblatt verstärkt, woraus sich erhöhte Anforderungen an Mechanik und Material ergeben. Rotoren mit 5 oder 7 Rotorblättern führen zu aerodynamischen Zuständen, die mathematisch relativ kompliziert beschreibbar sind, da sich Luftströmungen an den Rotorblättern gegenseitig beeinflussen. Zudem ermöglichen derartige Rotoren keine Ertragssteigerungen, die in einem wirtschaftlichen Verhältnis zum Mehraufwand gegenüber Rotoren mit 3 Rotorblättern stehen.

Häufig weisen Windenergieanlagen Pitch-Antriebssysteme zur Rotorblattverstellung auf. Durch eine Anstellwinkelverstellung von Rotorblättern werden die Strömungsgeschwindigkeitsunterschiede zwischen Saug- und Druckseiten der Rotorblätter verändert. Dies beeinflußt wiederum auf den Rotor wirkendes Drehmoment und Rotorgeschwindigkeit.

Für einen Betrieb von Pitch-Antriebs- und -Regelungssystemen ist elektrische Energie erforderlich, die bei konventionellen Windenergieanlagen über Schleifringe von der Gondel zu in der Rotornabe angeordneten elektrischen Verbrauchern übertragen wird. Über die Schleifringe werden vielfach auch Status- und Steuerungssignale für die Pitch-Antriebs- bzw. -Regelungssysteme übertragen. Schleifringe unterliegen mechanischem Verschleiß und stellen eine nicht unerhebliche potentielle Störungsquelle in einer Windenergieanlage dar.

DE 10 2004 017323 und DE 10153644 offenboren eine Windenergieanlage mit Pitch-Antriebssystem.

Der vorliegenden Erfindung liegt die Aufgabe zugrunde, eine Windenergieanlage zu schaffen, deren Pitch-Antriebs- und -Regelungssysteme zuverlässig und robust gegenüber äußeren Umgebungsbedingungen mit Energie versorgt werden, und hierfür geeignete Systemkomponenten anzugeben.

Diese Aufgabe wird erfindungsgemäß durch eine Windenergieanlage mit den in Anspruch 1 angegebenen Merkmalen und durch eine Energieübertragungseinrichtung mit den in Anspruch 11 angegebenen Merkmalen gelöst. Vorteilhafte Weiterbildungen der vorliegenden Erfindung sind in den abhängigen Ansprüchen angegeben.

Die erfindungsgemäße Windenergieanlage weist einen Rotor auf, der eine an einer Gondel gelagerte Rotornabe und eine Mehrzahl von mittels jeweils einer elektrischen Antriebseinrichtung verstellbaren Rotorblättern umfaßt. Mit dem Rotor ist ein elektrischer Generator verbunden. Konzentrisch zu einem Rotorlager ist ein Drehübertrager angeordnet, der zur Energieversorgung einer Mehrzahl von in der Rotornabe angeordneten elektrischen Verbrauchern vorgesehen ist. Ein Primärteil des Drehübertragers ist mit der Gondel verbunden. Ein Sekundärteil des Drehübertragers ist in der Rotornabe angeordnet und mit dieser drehbar. Außerdem umfaßt die Windenergieanlage einen ersten Frequenzumrichter zur Erzeugung einer hochfrequenten Erregerspannung aus einer niederfrequenten Versorgungsspannung, der zwischen dem Primärteil und einer Versorgungsspannungsquelle angeschlossen ist. Des weiteren ist ein zweiter Frequenzumrichter zur Erzeugung einer niederfrequenten Verbraucherspannung aus einer hochfrequenten transformierten Erregerspannung vorgesehen, der zwischen dem Sekundärteil und den elektrischen Verbrauchern in der Rotornabe angeschlossen ist.

Darüber hinaus kann der Drehübertrager Bestandteil eines den Rotor mit dem Generator verbindenden Getriebes sein und an einem rotorseitigen Getriebewellenende eine hochfrequente Wechselspannung über eine elektrische Steckverbindung bereitstellen.

Die erfindungsgemäße Windenergieanlage ermöglicht eine betriebssichere und keinen Wartungseinschränkungen unterliegende Versorgung von in der Rotornabe angeordneten elektrischen Verbrauchern mit elektrischer Energie. Dies ist besonders bei Offshore-Windenergieanlagen von großer Bedeutung. Die erfindungsgemäße Windenergieanlage ist insbesondere aufgrund einer Verwendung einer hochfrequenten Erregerspannung für den Drehübertrager robust gegenüber durch Windkräfte auf Rotor und Gondel ausgeübten Biegemomenten ohne nachteilige Auswirkungen auf eine Variation einer Luftspaltbreite zwischen Primär- und Sekundärteil. Der Drehübertrager ermöglicht darüber hinaus eine Übertragung einer hinreichen großen Dauerleistung zum Betrieb von mindestens 3 Pitch-Antriebs- und -Regelungssystemen.

Entsprechend einer vorteilhaften Weiterbildung der vorliegenden Erfindung ist ein Läufer des Generators mit der Rotornabe drehbar, und eine Läuferwicklung schließt sich an den Sekundärteil des Drehübertragers an. Dies ermöglicht eine kompakte und kostengünstige Ausführung einer Windenergieanlage.

Der Drehübertrager kann entsprechend einer weiteren vorteilhaften Ausgestaltung in das Rotorlager integriert sein, und das Rotorlager kann in ein antriebsseitiges Lager eines den Rotor mit dem Generator verbindenden Getriebes integriert sein. Auf diese Weise können Rotor, Getriebe, Lager sowie Drehübertrager effizient aufeinander abgestimmt und eine platzsparende Anlagenkomponentengestaltung erzielt werden. Entsprechend einer bevorzugten Weiterbildung der vorliegenden Erfindung weist die hochfrequente Erregerspannung eine Frequenz von über 25 kHz auf. Auf diese Weise können akkustische Störungen für Menschen durch den Betrieb einer Windenergieanlage vermindert werden.

Die vorliegende Erfindung wird nachfolgend an einem Ausführungsbeispiel anhand der Zeichnung näher erläutert. Es zeigt
- Figur 1: eine erste Variante einer Windenergieanlage mit einer erfindungsgemäßen Energieübertragungseinrichtung,
- Figur 2: eine zweite Variante einer Windenergieanlage mit einer erfindungsgemäßen Energieübertragungseinrichtung,
- Figur 3: eine dritte Variante einer Windenergieanlage mit einer erfindungsgemäßen Energieübertragungseinrichtung,
- Figur 4: eine Querschnittsdarstellung eines Primär- und Sekundärteil eines Drehübertragers einer Energieübertragungseinrichtung gemäß Figur 3.

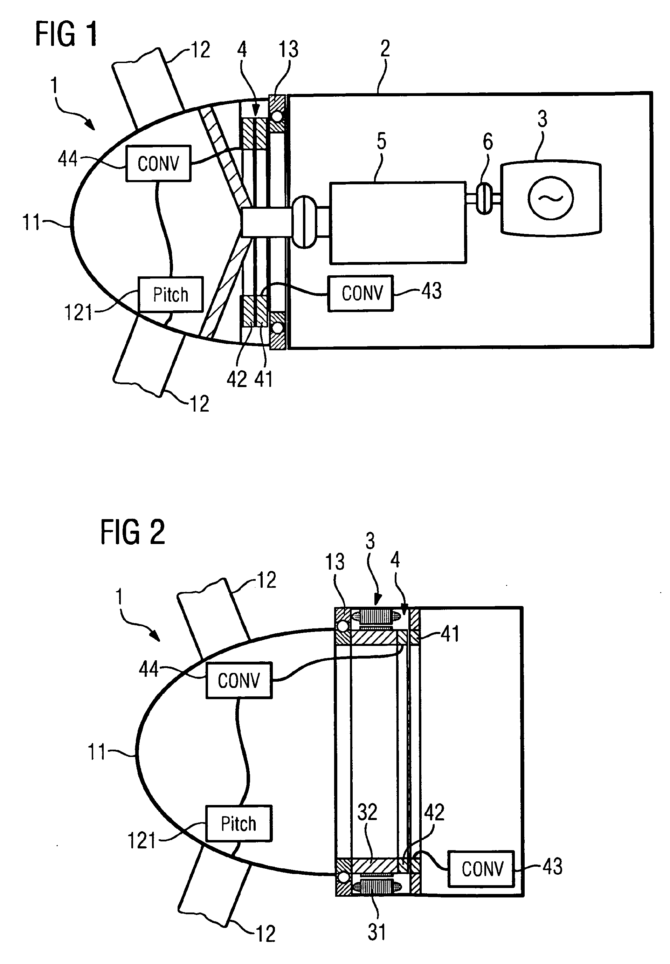

Die in Figur 1 dargestellte Windenergieanlage weist einen Rotor 1 auf, der eine an einer Gondel 2 gelagerte Rotornabe 11 und mehrere Rotorblätter 12 umfaßt, die jeweils mittels eines separaten Pitch-Systems 121 verstellbar sind. Der Rotor 1 ist über ein Getriebe 5 und eine Kupplung 6 mit einem elektrischen Generator 3 verbunden.

Darüber hinaus weist die in Figur 1 dargestellte Windenergieanlage eine Energieübertragungseinrichtung 4 auf, die einen konzentrisch zu einem Rotorlager 13 angeordneten Drehübertrager zur Energieversorgung des in der Rotornabe 11 angeordneten Pitch-Systems 121 umfaßt. Ein ringförmiger Primärteil 41 des Drehübertragers ist über das Rotorlager 13 mit der Gondel 2 verbunden. Der Primärteil 41 und das Rotorlager 13 können zu einer integrierten Systemkomponente zusammengefaßt sein.

Außerdem umfaßt der Drehübertrager einen an der Rotornabe 11 angeflanschten und mit dieser drehbaren ringförmigen Sekundärteil 42. Zur Erzeugung einer hochfrequenten Erregerspannung aus einer niederfrequenten Versorgungsspannung ist ein erster Frequenzumrichter 43 vorgesehen, der zwischen dem Primärteil 43 und einer in Figur 1 nicht explizit dargestellten Versorgungsspannungsquelle angeschlossen ist. Die Energieübertragungseinrichtung 4 umfaßt ferner einen zweiten Frequenzumrichter 44 zur Erzeugung einer niederfrequenten Verbraucherspannung aus einer hochfrequenten transformierten Erregerspannung. Anstelle eines zweiten Frequenzumrichters kann auch ein Gleichrichter zur Erzeugung einer Gleichspannung vorgesehen sein. Der zweite Frequenzumrichter 44 ist zwischen dem Sekundärteil 42 und dem Pitch-System 121 angeschlossen.

Primärteil 41 und Sekundärteil 42 des Drehübertragers der in Figur 1 dargestellten Windenergieanlage sind axial beabstandet in separaten Ebenen angeordnet und weisen im wesentlichen denselben Durchmesser auf. Ein Luftspalt des Drehübertragers, in dem durch die Erregerspannung ein hochfrequentes elektromagnetisches Feld erzeugt wird, erstreckt sich axial zwischen Primärteil 41 und Sekundärteil 42.

Über den Drehübertrager können auch Steuerungs- und Statussignale vom und zum Pitch-System 121 übertragen werden. Alternativ dazu können die Steuerungs- und Statussignale auch über eine WLAN-Verbindung oder eine geeignete andere Funkverbindung übertragen werden.

Bei der in Figur 2 dargestellten Windenergieanlage ist im Unterschied zur in Figur 1 dargestellten Windenergieanlage ein Läufer 32 des Generators 3 mit der Rotornabe 11 drehbar und in diese integriert. Das Rotorlager 13 der in Figur 2 dargestellten Windenergieanlage schließt sich an einen Stator 31 des Generators 3 an. Darüber hinaus ist der Sekundärteil 42 des Drehübertragers benachbart zu einer Läuferwicklung und konzentrisch zu dieser angeordnet.

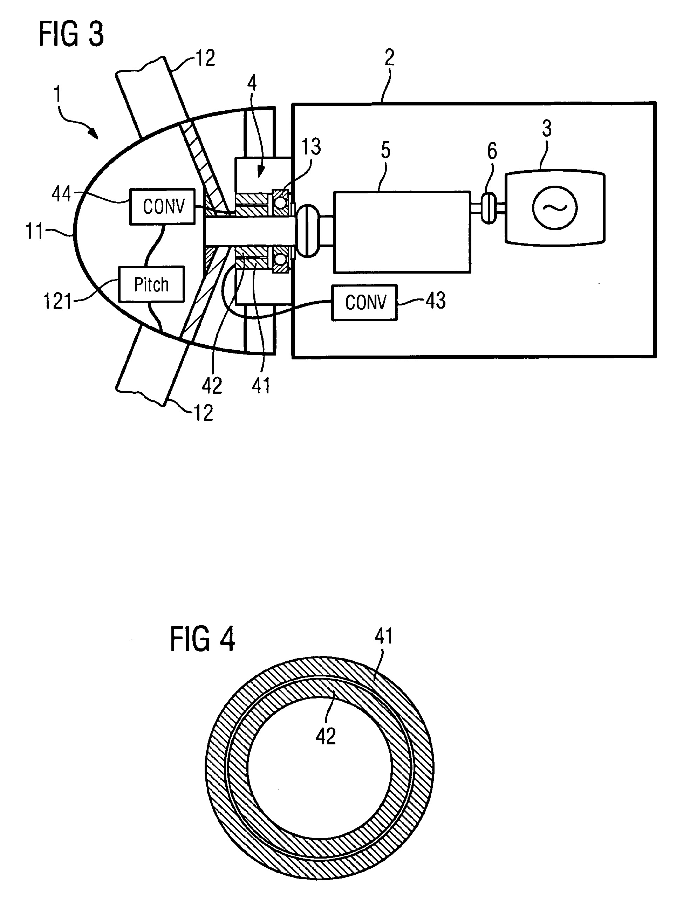

Die in Figur 3 dargestellte Windenergieanlage umfaßt einen Drehübertrager, dessen Primärteil 41 und Sekundärteil 42 im Unterschied zur Anordnung gemäß Figur 1 konzentrisch ineinander in einer gemeinsamen Ebene angeordnet sind (siehe auch Figur 4). Der Luftspalt des Drehübertragers erstreckt sich radial zwischen Primärteil 41 und Sekundärteil 42, die unterschiedliche Durchmesser aufweisen. Vorteilhafterweise bilden Drehübertrager und Rotorlager 13 eine integrierte Systemkomponente.

Die Anwendung der vorliegenden Erfindung ist nicht auf obige Ausführungsbeispiele beschränkt.

## Patentansprüche

1. Windenergieanlage mit
- einem Rotor (1), der eine an einer Gondel (2) gelagerte Rotornabe (11) und eine Mehrzahl von mittels jeweils einer elektrischen Antriebseinrichtung verstellbaren Rotorblättern (12) umfaßt,
- einem mit dem Rotor (1) verbundenen elektrischen Generator (3),
- einem konzentrisch zu einem Rotorlager angeordneten Drehübertrager zur Energieversorgung einer Mehrzahl von in der Rotornabe angeordneten elektrischen Verbrauchern,
- einem mit der Gondel (2) verbundenen Primärteil (41) des Drehübertragers,
- einem in der Rotornabe (11) angeordneten und mit dieser drehbaren Sekundärteil (42) des Drehübertragers,
- einem ersten Frequenzumrichter (43) zur Erzeugung einer hochfrequenten Erregerspannung aus einer niederfrequenten Versorgungsspannung, der zwischen dem Primärteil (41) und einer Versorgungsspannungsquelle angeschlossen ist,
- einem zweiten Frequenzumrichter (44) zur Erzeugung einer niederfrequenten Verbraucherspannung aus einer hochfrequenten transformierten Erregerspannung, der zwischen dem Sekundärteil (42) und den elektrischen Verbrauchern in der Rotornabe angeschlossen ist.

2. Windenergieanlage nach Anspruch 1,
bei der ein Läufer des Generators mit der Rotornabe drehbar ist.

3. Windenergieanlage nach Anspruch 2,
bei der sich eine Läuferwicklung an den Sekundärteil des Drehübertragers anschließt.

4. Windenergieanlage nach einem der Ansprüche 1 bis 3,
bei der Primärteil und Sekundärteil konzentrisch ineinander in einer gemeinsamen Ebene angeordnet sind, und bei der sich ein Luftspalt des Drehübertragers radial zwischen Primärteil und Sekundärteil erstreckt.

5. Windenergieanlage nach einem der Ansprüche 1 bis 3,
bei der Primärteil und Sekundärteil axial versetzt in separaten Ebenen angeordnet sind, und bei der sich ein Luftspalt des Drehübertragers axial zwischen Primärteil und Sekundärteil erstreckt.

6. Windenergieanlage nach einem der Ansprüche 1 bis 5,
bei der der Drehübertrager in das Rotorlager integriert ist.

7. Windenergieanlage nach Anspruch 6,
bei der das Rotorlager in ein antriebsseitiges Lager eines den Rotor mit dem Generator verbindenden Getriebes integriert ist.

8. Windenergieanlage nach einem der Ansprüche 1 bis 7,
bei der über den Drehübertrager eine Übermittlung von Steuerungs- und/oder Statussignalen von und/oder zu einem Pitch-Antriebssystem erfolgt.

9. Windenergieanlage nach einem der Ansprüche 1 bis 8,
bei dem die hochfrequente Erregerspannung eine Frequenz von über 25 kHz aufweist.

10. Energieübertragungseinrichtung für eine Windenergieanlage mit
- einem konzentrisch zu einem Rotorlager der Windenergieanlage anordenbaren Drehübertrager zur Energieversorgung einer Mehrzahl von in einer Rotornabe angeordneten elektrischen Verbrauchern,
- einem mit einer Gondel (2) verbindbaren Primärteil (41) des Drehübertragers,
- einem in der Rotornabe (11) anordenbaren und mit dieser drehbaren Sekundärteil (42) des Drehübertragers,
- einem ersten Frequenzumrichter (43) zur Erzeugung einer hochfrequenten Erregerspannung aus einer niederfrequenten Versorgungsspannung, der zwischen dem Primärteil (41) und einer Versorgungsspannungsquelle anschließbar ist,
- einem zweiten Frequenzumrichter (44) zur Erzeugung einer niederfrequenten Verbraucherspannung aus einer hochfrequenten transformierten Erregerspannung, der zwischen dem Sekundärteil (42) und den elektrischen Verbrauchern in der Rotornabe anschließbar ist.

## Claims

1. Wind energy plant with
- a rotor (1) which comprises a rotor hub (11) mounted on a pod (2) and a plurality of rotor blades (12) which can be adjusted by means of in each case one electrical drive device,
- an electrical generator (3) which is connected to the rotor (1),
- a rotary transformer, which is arranged concentrically with respect to a rotor bearing, for supplying energy to a plurality of electrical loads arranged in the rotor hub,
- a primary part (41) of the rotary transformer which is connected to the pod (2),
- a secondary part (42) of the rotary transformer which is arranged in the rotor hub (11) and can rotate therewith,
- a first frequency converter (43) for generating a radiofrequency field voltage from a low-frequency supply voltage, said frequency converter being connected between the primary part (41) and a supply voltage source,
- a second frequency converter (44) for generating a low-frequency load voltage from a radiofrequency, transformed field voltage, said second frequency converter being connected between the secondary part (42) and the electrical loads in the rotor hub.

2. Wind energy plant according to Claim 1,
in which a rotor of the generator is capable of rotating with the rotor hub.

3. Wind energy plant according to Claim 2,
in which a rotor winding adjoins the secondary part of the rotary transformer.

4. Wind energy plant according to one of Claims 1 to 3,
in which the primary part and the secondary part are arranged concentrically one inside the other in a common plane, and in which an air gap of the rotary transformer extends radially between the primary part and the secondary part.

5. Wind energy plant according to one of Claims 1 to 3,
in which the primary part and the secondary part are arranged so as to be axially offset in separate planes, and in which an air gap of the rotary transformer extends axially between the primary part and the secondary part.

6. Wind energy plant according to one of Claims 1 to 5,
in which the rotary transformer is integrated in the rotor bearing.

7. Wind energy plant according to Claim 6,
in which the rotor bearing is integrated in a drive-side bearing of a transmission which connects the rotor to the generator.

8. Wind energy plant according to one of Claims 1 to 7,
in which control and/or status signals are transmitted from and/or to a pitch drive system via the rotary transformer.

9. Wind energy plant according to one of Claims 1 to 8,
in which the radiofrequency field voltage has a frequency of over 25 kHz.

10. Energy transmission device for a wind energy plant with
- a rotary transformer, which can be arranged concentrically with respect to a rotor bearing of the wind energy plant, for supplying energy to a plurality of electrical loads arranged in a rotor hub,
- a primary part (41) of the rotary transformer which can be connected to a pod (2),
- a secondary part (42) of the rotary transformer which can be arranged in the rotor hub (11) and is capable of rotating therewith,
- a first frequency converter (43) for generating a radiofrequency field voltage from a low-frequency supply voltage, it being possible for said first frequency converter to be connected between the primary part (41) and a supply voltage source,
- a second frequency converter (44) for generating a low-frequency load voltage from a radiofrequency transformed field voltage, it being possible for said second frequency converter to be connected between the secondary part (42) and the electrical loads in the rotor hub.

## Revendications

1. Eolienne comprenant
- un rotor (1), qui comprend un moyeu (11) de rotor monté sur une nacelle (2) et une pluralité de lames (12) de rotor réglables au moyen respectivement d'un dispositif électrique d'entraînement,
- une génératrice (3) électrique reliée au rotor (1),
- un transformateur de rotation disposé concentriquement à un palier du rotor pour l'alimentation en énergie d'une pluralité de consommateurs électriques disposés dans le moyeu du rotor,
- une partie (41) primaire du transformateur de rotation reliée à la nacelle (2),
- une partie (42) secondaire du transformateur de rotation disposée dans le moyeu (11) du rotor et pouvant tourner avec celui-ci,
- un premier convertisseur (43) de fréquence pour la production d'une tension d'excitation de haute fréquence à partir d'une tension d'alimentation de basse fréquence, qui est raccordé entre la partie (41) primaire et une source de tension d'alimentation,
- un deuxième convertisseur (44) de fréquence pour la production d'une tension de consommateur de basse fréquence à partir d'une tension d'excitation transformée de haute fréquence, qui est raccordé entre la partie (42) secondaire et les consommateurs électriques dans le moyeu du rotor.

2. Eolienne suivant la revendication 1,
dans laquelle un induit de la génératrice peut tourner avec le moyeu du rotor.

3. Eolienne suivant la revendication 2,
dans laquelle un enroulement d'induit se raccorde à la partie secondaire du transformateur de rotation.

4. Eolienne suivant l'une des revendications 1 à 3,
dans laquelle la partie primaire et la partie secondaire sont disposées concentriquement l'une dans l'autre dans un plan commun et dans laquelle un entrefer du transformateur de rotation s'étend radialement entre la partie primaire et la partie secondaire.

5. Eolienne suivant l'une des revendications 1 à 3,
dans laquelle la partie primaire et la partie secondaire sont disposées dans des plans séparés en étant décalées axialement et dans laquelle un entrefer du transformateur de rotations s'étend axialement entre la partie primaire et la partie secondaire.

6. Eolienne suivant l'une des revendications 1 à 5,
dans laquelle le transformateur de rotation est intégré au palier du rotor.

7. Eolienne suivant la revendication 6,
dans laquelle le palier du rotor est intégré dans un palier du côté de l'entraînement d'une transmission reliant le rotor à la génératrice.

8. Eolienne suivant l'une des revendications 1 à 7,
dans laquelle il s'effectue, par l'intermédiaire du transformateur de rotation, une transmission de signaux de commande et/ou d'état à partir d'un système d'entraînement pitch.

9. Eolienne suivant l'une des revendications 1 à 8,
dans laquelle la tension d'excitation de haute fréquence a une fréquence de plus de 25 kHz.

10. Dispositif de transfert d'énergie pour une éolienne comprenant
- un transformateur de rotation pouvant être monté concentriquement à un palier de rotor de l'éolienne pour l'alimentation en énergie d'une pluralité de consommateurs électriques disposés dans un moyeu de rotor,
- une partie (41) primaire du transformateur de rotation, qui peut être reliée à une nacelle (2),
- une partie (42) secondaire du transformateur de rotation, qui peut être disposée dans le moyeu (11) du rotor et qui peut tourner avec celui-ci,
- un premier convertisseur (43) de fréquence pour la production d'une tension d'excitation de haute fréquence à partir d'une tension d'alimentation de basse fréquence, qui peut être raccordé entre la partie (41) primaire et une source de tension d'alimentation,
- un deuxième convertisseur (44) de fréquence pour la production d'une tension de consommateur de basse fréquence à partir d'une tension d'excitation transformée de haute fréquence, qui peut être raccordé entre la partie (42) secondaire et les consommateurs électriques dans le moyeu du rotor.
